# EUROPEAN PATENT SPECIFICATION

(11) **EP 4 202 118 B1**
(45) Date of publication and mention of the grant of the patent: **06.08.2025**
(21) Application number: 21216855.3
(22) Date of filing: 22.12.2021
(51) Int. Cl.: D21H 19/40, D21H 19/56, D21H 19/58, D21H 19/60, D21H 19/62, D21H 19/82

(54) **COATED PAPERBOARD**
BESCHICHTETER KARTON
CARTON REVÊTU

(43) Date of publication of application: 28.06.2023
(73) Proprietor: Billerud Aktiebolag (publ), 169 27 Solna (SE)
(72) Inventor: PROSPER, Wouter, 714 93 Kopparberg (SE); LARSSON, Johan, 805 98 Gävle (SE)
(74) Representative: Kransell & Wennborg KB

(56) References cited:
- EP-A1- 2 199 077
- WO-A1-2017/093125
- WO-A1-2019/239334
- WO-A1-2020/121162
- WO-A1-2020/152635
- WO-A1-2021/234559
- GB-A- 2 473 718

## Description

### TECHNICAL FIELD

The present disclosure relates to the field of coated paperboard and in particular to coated paperboard for use in packaging of fatty & liquid food.

### BACKGROUND

Conventional coated paperboard for use in liquid food packaging comprises two outer layers of extrusion-coated polyethylene (PE) on the central paperboard. The PE-coatings serves to protect the paperboard from liquid inside the package as well as liquid and moisture from the outside as the structural integrity of the paperboard otherwise would deteriorate and ultimately be lost.

Moreover, the PE-coatings are heat-sealable making it possible to produce a package from a PE-coated board by heat-sealing it to itself.

From an environmental perspective it is desirable to reduce the amount of PE used in coated paperboards for use in packaging, especially in liquid food packaging.

In EP 2 199 077 A1 an oxygen barrier is formed by liquid film coating of a dispersible or dissolvable polymer, preferably PVOH, EVOH or starch is disclosed. The polymer binder of the dispersion or solution to be coated as a liquid film is mixed with inorganic compounds such as laminar talcum particles in amount of 30-50 wt%.

In GB 2 473 718 A a board is coated with a mixture of talcum powder, resin, preferably epoxy resin, calcium carbonate and polyolefin to create a waterproofing layer.

In WO 2021/234559 A1 a board is coated with a first and optional second dispersion coating applied in that order on a paperboard. The second dispersion coating can be a polyolefin dispersion, but in such case it should be free of pigments.

### SUMMARY

The present disclosure aims to provide a paperboard product for use in packaging, especially in liquid packaging, where water-vapour barrier and water-resistance properties as well as heat-sealability are important.

Moreover, a reduction of the amount of polyethylene (PE) regularly applied to paperboard products used in liquid packaging should be possible to reduce.

There is, thus, as a first aspect of the present invention as defined in the current claim 1.

The coated paperboard product typically comprises a first layer and a second layer.

The first and second layer of the paperboard substrate typically comprises chemical pulp, such as kraft pulp. The first and second layers of the paperboard substrate typically each comprises at least 80 wt-% kraft pulp based on the dry weight of the first and second layers. The density measured according to ISO 534:2011 of the first and second layers of the paperboard substrate is typically above 650 kg/m³, such as above 700 kg/m³. The paperboard substrate typically further comprises a third layer arranged between the first layer and the second layer, wherein the third layer comprises mechanical pulp, such as chemitermomechanical pulp (CTMP). The density measured according to ISO 534:2011 of the third layer of the paperboard substrate is typically below 600 kg/m³, such as below 550 kg/m³.

The grammage measured according to ISO 536:2020 of the paperboard substrate is typically 120-300 g/m², such as 125-280 g/m².

The coat weight of the barrier coating is typically at least 4 g/m², such as 4-15 g/m², such as 5-10 g/m².

The polyolefin-based binder is typically a polyethylene (PE)-based binder. The PE-based binder typically comprises ethylene-co-alkene copolymers. The PE-based binder typically comprises a copolymer of ethylene and a carboxylic acid monomer.

The paperboard substrate typically has a first side forming a top side and a second side forming a reverse side and wherein the paperboard product comprises said barrier coating on the top side of the paperboard substrate. The paperboard product typically comprises said barrier coating on the topside and on the reverse side of the paperboard substrate. The coated paperboard product typically further comprises a PE-layer being the outer layer on the reverse side of the paperboard substrate.

The coated paperboard product typically comprises a pre-coating arranged between the paperboard substrate and the barrier coating. The pre-coating typically comprises binder and pigment. The binder of the pre-coating is typically selected from the group consisting of ethylene-acrylic acid copolymer (EAA), ethylene-methacrylic-acid-copolymer (EMAA), maleic acid ethylene copolymer (MAE), vinyl acetate acrylate copolymer (VAcA), styrene-acrylate copolymer (SA) and styrene-butadiene copolymer (SB).The amount of pigment in the pre-coating is typically 10-50 wt-%, such as 15-40 wt-%, based on the dry weight of the pre-coating. The amount of pigment in the pre-coating is typically 70-95 wt-%, such as 80-90 wt-%, based on the dry weight of the pre-coating.

The amount of talc in the barrier coating is typically 20-40 wt-%, such as 20-35 wt-% based on the dry weight of the barrier coating.

The amount of polyolefin-based binder in the barrier coating is typically at least 55 wt-%, such as 55-75 wt-% based on the dry weight of the barrier coating.

The Cobb 1800 s value of the coated paperboard product measured according to ISO 535: 2014 is typically below 2.5 g/m².

The water vapor transmission rate (WVTR) measured according to ISO 15106-1 at 38°C and 90% relative humidity (RH) of the coated paperboard product is typically below 110 g/(m² day).

The recyclability measured according to PTS Method PTS-RH 021/97 of the coated paperboard product is typically at least 80%.

As a second aspect of the present disclosure, there is provided a method of producing a coated paperboard product as defined in the current claim 9.

The barrier coating is typically applied in-line.

The barrier coating is typically coated on the topside of the paperboard substrate. The barrier coating is typically coated on the topside and on the reverse side of the paperboard substrate.A PE-layer is typically produced as the outer layer on the reverse side of the paperboard substrate. The PE-layer is typically produced by extrusion or lamination coating.

As a third aspect of the present disclosure there is provided use of a coating comprising talc and a polyolefin-based binder as a water-resistant barrier on a paperboard substrate as defined in the current claim 12.

The inventors have realized that coating a paperboard with a barrier coating comprising 15-40 wt-% talc and a polyolefin-based binder a coated paperboard is obtained that has barrier properties combined with heat-sealability. Moreover, the need for a extrusion-coated PE-layer at least on the outside of a package produced from the coated paperboard is omitted.

### BRIEF DESCRIPTION OF THE DRAWINGS

Fig 1 is a schematic illustration of an embodiment of the coated paperboard product 1 of the present disclosure.
Fig 2 is a schematic illustration of an embodiment of the coated paperboard product 2 of the present disclosure.
Fig 3 is a schematic illustration of an embodiment of the coated paperboard product 3 of the present disclosure.
Fig 4 is a schematic illustration of an embodiment of the coated paperboard product 4 of the present disclosure.
Fig 5 is a schematic illustration of an embodiment of the coated paperboard product 5 of the present disclosure.
Fig 6 is a schematic illustration of an embodiment of the coated paperboard product 6 of the present disclosure.
Fig 7 is a schematic illustration of an embodiment of the coated paperboard product 7 of the present disclosure.
Fig 8 is a schematic illustration of an embodiment of the coated paperboard product 8 of the present disclosure.

### DETAILED DESCRIPTION

According to a first aspect of the present disclosure there is provided a coated paperboard product as defined in the current claim 1.

A suitable polyolefin-based binder is typically a PE-based binder, such as the PE-based binder described in WO2021/225764 A1. The PE-based binder typically comprises a base polymer, a dispersant and a neutralizing agent. The base polymer is typically an ethylene-co-alkene copolymer comprising non-functionalized ethylene-co-alkene copolymers wherein the weight-to-weight ratio of the structural units of ethylene to alkene is typically in the range of from 99.8:0.2 to 50:50. The dispersant copolymer typically has an acid value of 130 or less and comprises structural units of ethylene and a carboxylic acid monomer. The dispersant copolymer typically has a melt flow index in the range of from 50 to 2000 g/10 min at 190 °C/2.16 kg, and a weight-to-weight ratio of structural units of ethylene to carboxylic acid monomer in the range of from 95:5 to 70:30. The neutralizing agent is typically a hard base and the concentration of the neutralizing agent is sufficient to neutralize at least half of the carboxylic acid groups present in the PE-based binder.

It has surprisingly been found by the inventors that talc is a particularly suitable pigment due to its synergistic functions with the polyolefin-based binder in dry as well as humid and wet environments. The talc and polyolefin-based binder in combination displays beneficial properties with respect to water-vapour resistance, water-resistance and heat-sealability. The amount of talc in the barrier coating may be 20-40 wt-%, such as 20-35 wt-% based on the dry weight of the barrier coating. The amount of polyolefin-based binder in the barrier coating is typically at least 55 wt-%, such as 55-75 wt-% based on the dry weight of the barrier coating. Typically, additives, such as rheology modifiers, may also be added to the dispersion.

The paperboard substrate has a first side forming a topside and a second side forming a reverse side and typically the paperboard product comprises the barrier coating at least on the topside of the paperboard substrate. The paperboard product may comprise a barrier coating on the topside as well as on the reverse side of the paperboard substrate. The reverse side is the side that is intended to face the interior of a package formed from the coated paperboard and the topside is the side that faces the exterior of the package and that a consumer can see before opening. The paperboard product typically further comprises a PE-layer being the outer layer on the reverse side of the paperboard substrate. Such PE-layer protects the paperboard substrate from liquid foods.

The water resistance according to the Cobb 1800 s test (measured according to ISO 535) is typically below 2.5 g/m² on the coated paperboard product. Such Cobb 1800 value is obtained by measuring on a barrier coated paperboard without any PE-layer. Thus, by the application of the barrier coating, at least an outer PE-layer can be omitted compared with conventional paperboards for liquid foods, and thereby the PE ratio as determined by the ratio of PE of the whole coated paperboard is advantageously decreased. Typically, at least the PE-layer applied to the topside on conventional paperboards for liquid foods can be omitted.

It follows that the paperboard substrate is preferably liquid packaging board (LPB). The LPB may have a basis weight according to ISO 536:2020 of 120-300 g/m², such as 125-280 g/m². Further, the LPB typically comprises hydrophobic size, e.g. rosin size, AKD and/or ASA. In one embodiment, the LPB comprises rosin size in combination with AKD or ASA. The hydrophobic size is preferably provided as internal sizing (i.e. added in the wet end of the paperboard machine).

The weight of the barrier coating is typically at least 4 g/m², such as 4-15 g/m², such as 5-10 g/m². From an economical and environmental perspective, it is advantageous to keep the coat weight as low as possible and in a full-scale coating machine, the coat weight can be kept lower than in a laboratory equipment.

The coated paperboard product may comprise a pre-coating arranged between the paperboard substrate and the barrier coating. If the surface of the paperboard substrate is rough, it is beneficial to apply a pre-coating to level out the surface. The pre-coating typically comprises binder and pigment. The amount of pigment in the pre-coating is typically 10-50 wt-%, such as 15-40 wt-%, based on the dry weight of the pre-coating. Such an amount of pigment is beneficial for water vapour barrier properties. Alternatively, the amount of pigment in the pre-coating is 70-95 wt-%, such as 80-90 wt-%, based on the dry weight of the pre-coating. The barrier coating is typically almost optically transparent and a higher amount of pigment in the pre-coating is beneficial when a higher brightness of the coated paperboard product is desired.

The binder in the pre-coating is typically selected from the group consisting of ethylene-acrylic acid copolymer (EAA), ethylene-methacrylic-acid-copolymer (EMAA), maleic acid ethylene copolymer (MAE), vinyl acetate acrylate copolymer (VAcA), styrene-acrylate copolymer (SA) and styrene-butadiene copolymer (SB). The invention is not limited to a specific type of binder in the pre-coating and other binders of similar properties are also suitable.

The paperboard substrate may be surface sized, typically with a starch-based surface sizing to prevent, or at least decrease, the risk of curl and dust. Typically if the barrier coating is arranged on the topside of the paperboard substrate, the reverse side is beneficial to surface size with starch. On the other hand, if there is a barrier coating arranged on both topside and reverse side, the paperboard substrate is typically not surface sized on any of the sides.

The paperboard substrate typically comprises a first layer and a second layer, and the first and second layer of the paperboard substrate typically comprises chemical pulp, such as kraft pulp, preferably each of the first and second layer of the paperboard substrate comprises at least 80 wt-% kraft pulp based on the dry weight of the first and second layers. Such amount of kraft pulp is beneficial as it provides high strength. The density measured according to ISO 534:2011 of the first and second layers of the paperboard substrate is typically above 650 kg/m³, such as above 700 kg/m³, such as above 750 kg/m³.

The paperboard substrate typically further comprises a third layer arranged between the first layer and the second layer, wherein the third layer comprises mechanical pulp, such as chemitermomechanical pulp (CTMP). The density measured according to ISO 534:2011 of the third layer of the paperboard substrate is typically below 600 kg/m³, such as below 550 kg/m³. By arranging a third layer comprising mechanical pulp between the first and second layer an I-beam structure is formed combining strength, rigidity and low density.

In case the baseboard is a multi-layered baseboard having more than one layer in the baseboard, the individual layers can be separated as individual layers from the multi-layered paperboard. Thereby measurement of the individual layers is facilitated. For such separation, a FORTUNA Bandknife-Splitting Machine (Type AB 320 E/P) can be used. Such a machine that has been customized for paperboard splitting is commercially available and is used by several major companies in the paperboard field.

Alternatively, a surface grinding technique can be used to remove all layers but the layer of interest. Such a surface grinding is one of the services that are commercially available at RISE Bioeconomy (formerly Innventia) in Stockholm, Sweden.

All layers are produced from individual furnishes and such furnishes typically further comprises broke pulp.

The water vapor transmission rate (WVTR) measured according to ISO 15106-1 at 38°C and 90% relative humidity (RH) of the coated paperboard product is typically below 110 g/(m² day).

The recyclability measured according to PTS Method PTS-RH 021/97 of the coated paperboard product is typically at least 80%.

According to a second aspect of the present disclosure there is provided a method of producing a coated paperboard product as defined in the current claim 9.
- coating the paperboard substrate with a barrier coating, wherein the barrier coating comprises talc and a polyolefin-based binder and wherein the amount of talc in the barrier coating is 15-40 wt-% based on the dry weight of the barrier coating.

The barrier coating is typically coated on the topside of the paperboard substrate. In embodiments, the barrier coating is coated on the topside and on the reverse side of the paperboard substrate.

The method may further comprise the step of:
- coating the paperboard substrate with a pre-coating prior to coating with the barrier coating so that the pre-coating is arranged between the paperboard substrate and the barrier coating in the coated paperboard product.

The barrier coating and pre-coating may be applied in-line (also referred to as on-line). In such case, the productivity is increased by eliminating the handling operations linked to off-line treatment and by eliminating, or at least reducing, the amount of waste. In one embodiment, the method comprises drying between the application of the pre-coating layer and the application of the barrier coating layer. Drying is typically performed with non-contact drying, such as IR and/or hot air, or contact drying, such as a drying cylinder, or a combination of non-contact and contact drying.

Typically, a PE-layer is produced as the outer layer on the reverse side of the paperboard substrate. In such case, the PE-layer is typically produced by extrusion or lamination coating.

The examples and embodiments discussed above in connection to the first aspect apply to the second aspect *mutatis mutandis.*

According to a third aspect of the present disclosure there is provided use of a coating comprising talc and a polyolefin-based binder as a water-resistant barrier on a paperboard substrate according to the current claim 12.

The examples and embodiments discussed above in connection to the first and second aspect apply to the third aspect *mutatis mutandis.*

The aspects of the present disclosure will now be described with reference to the accompanying drawings, in which certain embodiments of the invention are shown. Like numbers refer to like elements throughout the description.

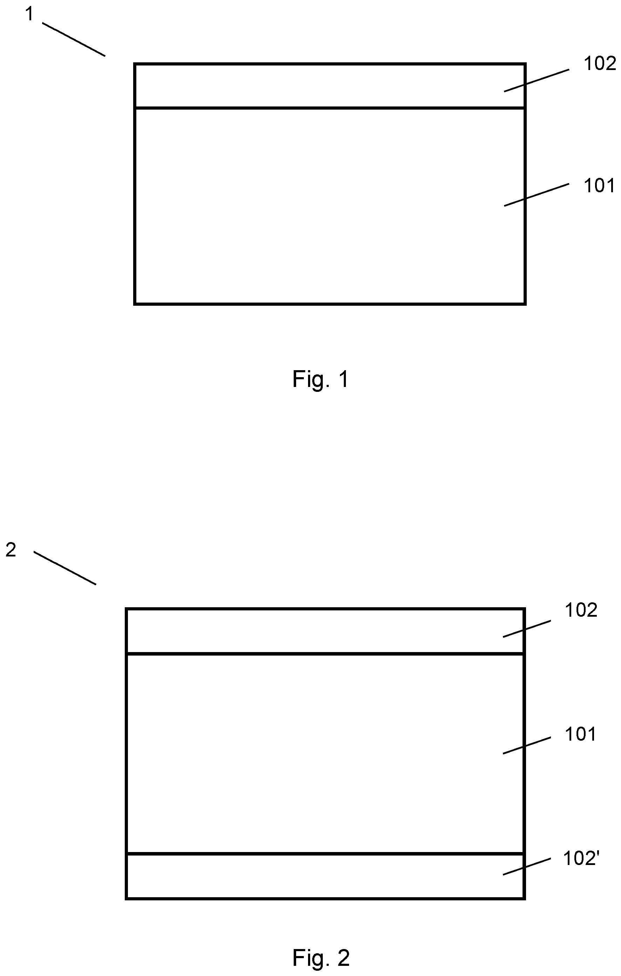

Fig 1 is a schematic illustration of an embodiment of the coated paperboard product 1 of the present disclosure. The paperboard product comprises a paperboard substrate 101 and a barrier coating layer 102 on the topside of the paperboard substrate.

Fig 2 is a schematic illustration of an embodiment of the coated paperboard product 2 of the present disclosure. The paperboard product comprises a paperboard substrate 101 and barrier coating layers 102, 102', wherein barrier coating 102 is on the topside and barrier coating 102' is on the reverse side of the paperboard substrate.

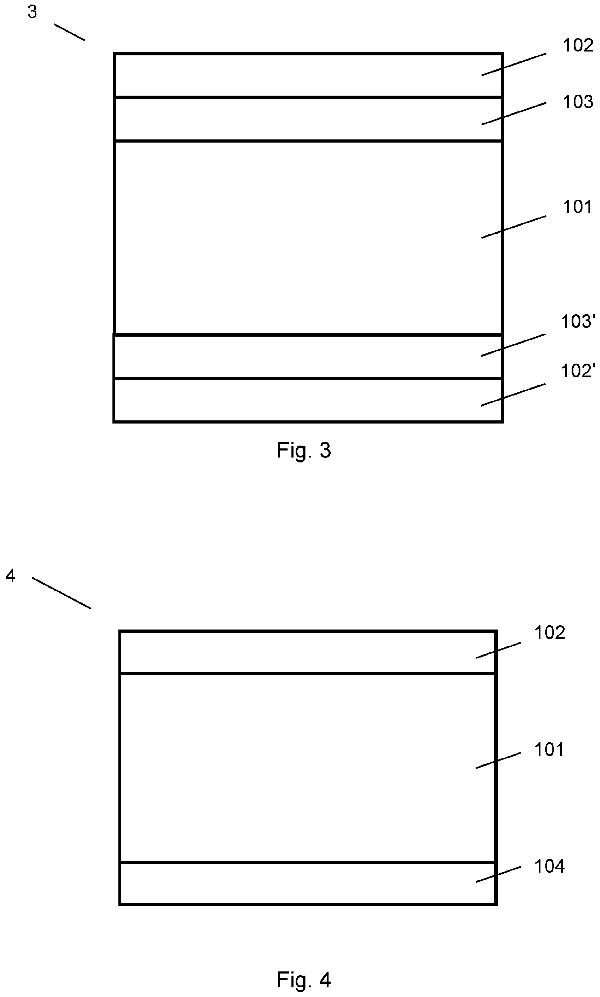

Fig 3 is a schematic illustration of an embodiment of the coated paperboard product 3 of the present disclosure. The paperboard product comprises a paperboard substrate 101 and barrier coating layers 102, 102', wherein barrier coating 102 is on the topside and barrier coating 102' is on the reverse side of the paperboard substrate. Between the paperboard substrate 101 and the barrier coating layers 102, 102' there are pre-coating layers 103,103'.

Fig 4 is a schematic illustration of an embodiment of the coated paperboard product 4 of the present disclosure. The paperboard product comprises a paperboard substrate 101 and barrier coating layer 102, wherein barrier coating 102 is on the topside of the paperboard substrate. On the reverse side of the paperboard substrate 101 there is a PE-layer 104.

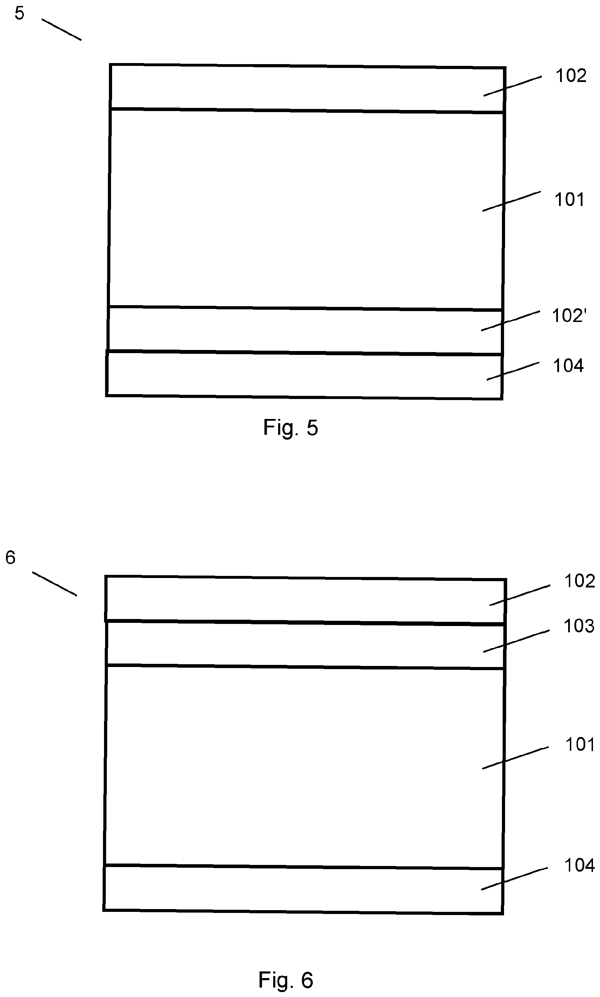

Fig 5 is a schematic illustration of an embodiment of the coated paperboard product 4 of the present disclosure. The paperboard product comprises a paperboard substrate 101 and barrier coating layers 102, 102', wherein barrier coating 102 is on the topside and barrier coating 102' is on the reverse side of the paperboard substrate. On the barrier coating 102' there is a PE-layer 104.

Fig 6 is a schematic illustration of an embodiment of the coated paperboard product 6 of the present disclosure. The paperboard product comprises the following: a paperboard substrate 101, and on the topside of the paperboard substrate 101 there is a barrier coating layer 102 and a pre-coating layer 103 arranged between the paperboard substrate 101 and the barrier coating layer 102. On the reverse side of the paperboard substrate there is a PE-layer 104.

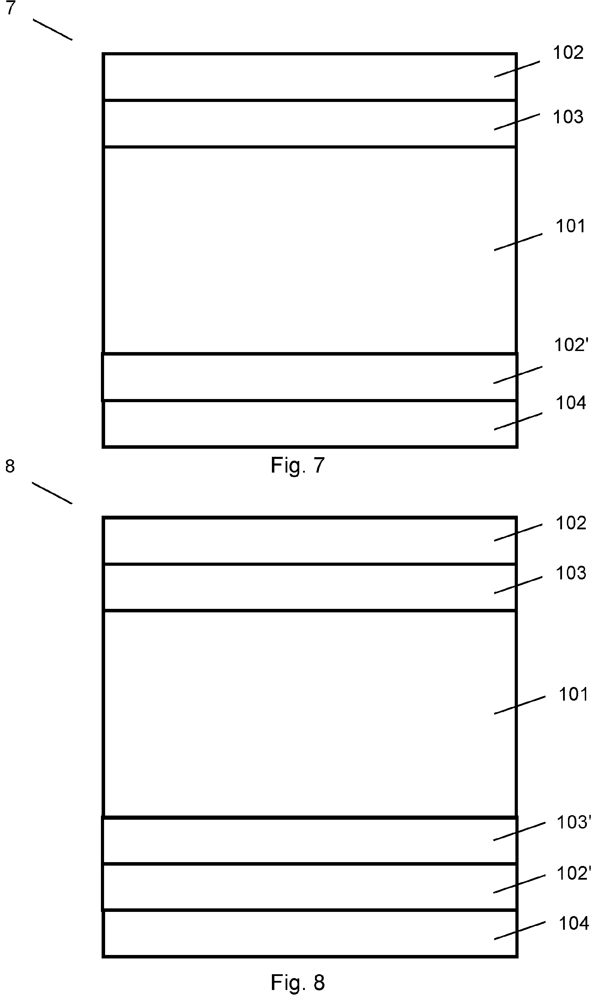

Fig 7 is a schematic illustration of an embodiment of the coated paperboard product 7 of the present disclosure. The paperboard product comprises a paperboard substrate 101 and barrier coating layers 102, 102', wherein barrier coating 102 is on the topside and barrier coating layer 102' is on the reverse side of the paperboard substrate 101. Between the barrier coating 102 and the paperboard substrate 101 there is a pre-coating layer 103. On the barrier coating layer 102' there is a PE-layer 104.

Fig 8 is a schematic illustration of an embodiment of the coated paperboard product 8 of the present disclosure. The paperboard product comprises a paperboard substrate 101 and barrier coating layers 102, 102', wherein barrier coating 102 is on the topside and barrier coating 102' is on the reverse side of the paperboard substrate 101. Between the barrier coating layer 102 and the paperboard substrate 101 there is a pre-coating layer 103 and between the barrier coating layer 102' and the paperboard substrate 101 there is a pre-coating layer 103'. On the barrier coating layer 102' there is a PE-layer 104.

### EXAMPLES

### Barrier coating of paperboard

Various amounts of pigment (talc (Finntalc C15B2), kaolin clay (Barrisurf LX) or CaCO₃ (Setacarb HG-ME 75%)) were dispersed in a polyolefin-based binder (the binder is further described in WO2021/225764 A1 by Dow Global Technologies) having a solids content of about 50%.

A baseboard (268 g/m²) having 3 plies: a top-ply of bleached kraft pulp, a centre ply with of a mix of CTMP, kraft fibres and broke pulp, and a bottom inner ply of unbleached kraft pulp was used as paperboard substrate. The baseboard was coated with a pre-coating containing 95 parts CaCO3 (HydroCarb 75), 5 parts kaolin clay (Kaovit), 16 parts styrene-acrylate (SA) latex (SA 95085.05), and 0.23 parts rheology modifier (CartaCoat RM15) using a pilot-scale blade coater at a coat weight of each pre-coating of about 13 g/m².

On top of the pre-coated baseboards, the different barrier coatings were coated with a pilot-scale blade coater at a coat weight of each barrier coating of about 8 g/m².

For evaluation of heat-sealing, the different barrier coatings were coated with a pilot-scale blade coater at a coat weight of each barrier coating of about 8 g/m² on paper sheets (about 70-80 g/m²) to fit into the equipment for testing of heat-sealability.

The properties of the barrier coated baseboard is shown in Table 2 below.

### Test parameters

The following parameters were evaluated, and the standard used for each evaluation is listed below:
- Cobb1800 (ISO535)
- WVTR @ 38 °C/90 %RH (ASTM F1249)
- PTS Recyclability (PTS-RH 021/97)
- Friction (ISO-8295)
- Runnability
- Heat-sealing/Seal Strength @ 160°C/0.5s/3bar (ASTM F88, EN 868-5*) on barrier coated paper sheets

To be suitable as a coated paperboard substrate for packages of liquid food the criteria presented in Table 1 should preferably be met.

**Table 1. Desired properties to be suitable as substrate for package of liquid food.**

| **Desired property** | **Analysis** | **Range** |
|---|---|---|
| Water barrier | Cobb1800 | <2.5 g/m2 |
| Water vapour barrier | WVTR @ 38 °C/90 %RH | <110 g/m2/day |
| Runnability | - | Addition of pigments >10% |
| Heat-seal with fbre tear | Seal Strength | Fibre tear @ >4 N |
| PTS Recyclability | PTS PTS-RH 021/97 | >80% |
| Appropriate range of friction | Test of friction | 0.5-0.7 |

Moreover, heat-sealing of barrier coated paper sheets yielding a heat-seal with fibre tear as well as a seal strength of >4N is equivalent to the seal strength needed by the converters to form a liquid-tight seal in a package from a paperboard coated with the same type of barrier.

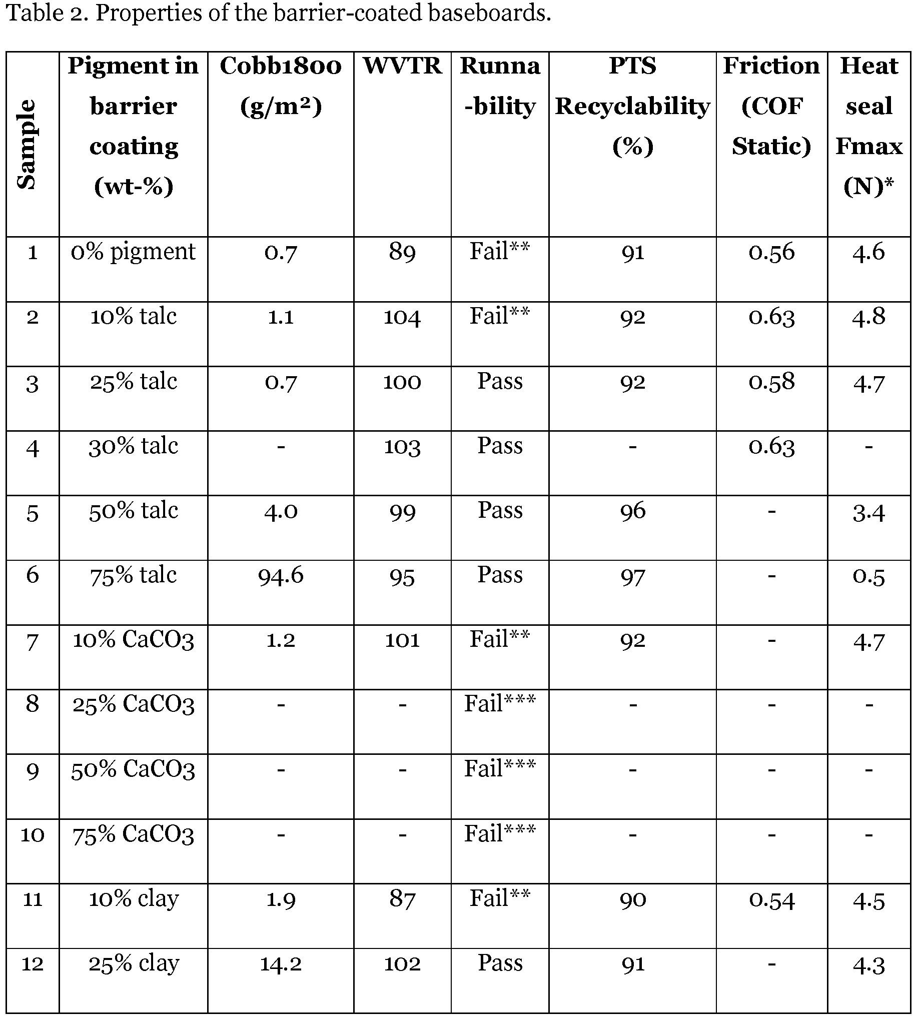

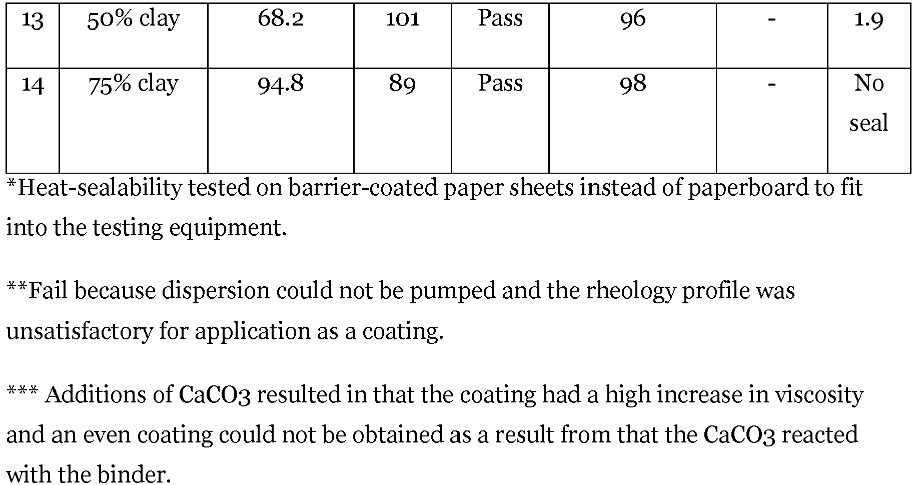

As indicated in Table 2, no or only 10% pigment is insufficient for runnability.

25% and 30% talc did not fail any of the criteria in Table 2. A further increase of the proportion of talc to 50%, however, affected both Cobb1800 and heat sealing negatively.

Regarding clay as a pigment, the addition of more than 10% negatively affected the water resistance (Cobb1800).

## Claims

1. A coated paperboard product comprising:
- a paperboard substrate; and
- a barrier coating, wherein the barrier coating comprises talc and a polyolefin-based binder and wherein the amount of talc in the barrier coating is 15-40 wt-% based on the dry weight of the barrier coating, and the polyolefin-based binder is a polyethylene (PE)-based binder, wherein the coat weight of the barrier coating is 4-15 g/m²;
- a pre-coating arranged between the paperboard substrate and the barrier coating, the pre-coating is arranged on the paperboard substrate and the barrier coating is arranged on the pre-coating.

2. The coated paperboard product of claim 1, wherein the grammage measured according to ISO 536:2020 of the paperboard substrate is 120-300 g/m², such as 125-280 g/m².

3. The coated paperboard product of claim 1 or 2, wherein the coat weight of the barrier coating is 5-10 g/m².

4. The coated paperboard product of any of the preceding claims, wherein the paperboard substrate has a first side forming a top side and a second side forming a reverse side and wherein the paperboard product comprises said barrier coating on the top side of the paperboard substrate.

5. The coated paperboard product of any one of claim 4, wherein the paperboard product comprises said barrier coating on the topside and on the reverse side of the paperboard substrate.

6. The coated paperboard product of any one of claim 4 or 5, further comprising a PE-layer being the outer layer on the reverse side of the paperboard substrate.

7. The coated paperboard product of any one of the preceding claims, wherein the pre-coating comprises binder and pigment.

8. The coated paperboard product of claim 7, wherein the binder of the pre-coating is selected from the group consisting of ethylene-acrylic acid copolymer (EAA), ethylene-methacrylic-acid-copolymer (EMAA), maleic acid ethylene copolymer (MAE), vinyl acetate acrylate copolymer (VAcA), styrene-acrylate copolymer (SA) and styrene-butadiene copolymer (SB).

9. A method of producing a coated paperboard product comprising the steps of:
- providing a paperboard substrate; and
- coating the paperboard substrate with a barrier coating, wherein the barrier coating comprises talc and a polyolefin-based binder and wherein the amount of talc in the barrier coating is 15-40 wt-% based on the dry weight of the barrier coating, the polyolefin-based binder is a polyethylene (PE)-based binder, and wherein the coat weight of the barrier coating 4-15 g/m²; and
- coating the paperboard substrate with a pre-coating prior to coating with the barrier coating so that the pre-coating is arranged on the paperboard substrate and between the paperboard substrate and the barrier coating in the coated paperboard product and the barrier coating is arranged on the pre-coating.

10. The method of claim 9, wherein the barrier coating is coated on the topside of the paperboard substrate.

11. The method of claim 10, wherein the barrier coating is coated on the topside and on the reverse side of the paperboard substrate.

12. Use of a coating comprising talc and a polyolefin-based binder as a water-resistant barrier on a paperboard substrate, wherein the amount of talc in the barrier coating is 15-40 wt-% based on the dry weight of the barrier coating, and the polyolefin-based binder is a polyethylene (PE)-based binder, and wherein the coat weight of the barrier coating is 4-15 g/ m².

## Patentansprüche

1. Beschichtetes Kartonprodukt, aufweisend:
- ein Kartonsubstrat;
- eine Barrierebeschichtung, wobei die Barrierebeschichtung Talk und ein Bindemittel auf Polyolefinbasis aufweist und wobei die Menge an Talk in der Barrierebeschichtung 15 bis 40 Gew.-% beträgt, bezogen auf das Trockengewicht der Barrierebeschichtung, und das Bindemittel auf Polyolefinbasis ein Polyethylen- (PE) basiertes Bindemittel ist, wobei das Beschichtungsgewicht der Barrierebeschichtung 4 bis 15 g/m² beträgt;
- eine Vorbeschichtung, angeordnet zwischen dem Kartonsubstrat und der Barrierebeschichtung, wobei die Vorbeschichtung auf dem Kartonsubstrat angeordnet ist und die Barrierebeschichtung auf der Vorbeschichtung angeordnet ist.

2. Beschichtetes Kartonprodukt nach Anspruch 1, wobei das Kartonsubstrat eine Grammatur gemäß ISO 536:2020 von 120 bis 300 g/m², beispielsweise 125 bis 280 g/m², aufweist.

3. Beschichtetes Kartonprodukt nach Anspruch 1 oder 2, wobei das Beschichtungsgewicht der Barrierebeschichtung bevorzugt 5-10 g/m² beträgt.

4. Beschichtetes Kartonprodukt nach einem der vorhergehenden Ansprüche, wobei das Kartonsubstrat eine erste Seite, die eine Oberseite bildet, und eine zweite Seite, die eine Rückseite bildet, aufweist und wobei das Kartonprodukt die Barrierebeschichtung auf der Oberseite des Kartonsubstrats aufweist.

5. Beschichtetes Kartonprodukt nach Anspruch 4, wobei das Kartonprodukt die Barrierebeschichtung auf der Oberseite und auf der Rückseite des Kartonsubstrats aufweist.

6. Beschichtetes Kartonprodukt nach einem der Ansprüche 4 oder 5, ferner aufweisend eine PE-Schicht, die die äußere Schicht auf der Rückseite des Kartonsubstrats bildet.

7. Beschichtetes Kartonprodukt nach einem der vorhergehenden Ansprüche, wobei die Vorbeschichtung ein Bindemittel und ein Pigment aufweist.

8. Beschichtetes Kartonprodukt nach Anspruch 7, wobei das Bindemittel der Vorbeschichtung ausgewählt ist aus der Gruppe bestehend aus Ethylen-Acrylsäure-Copolymer (EAA), Ethylen-Methacrylsäure-Copolymer (EMAA), Maleinsäure-Ethylen-Copolymer (MAE), Vinylacetat-Acrylat-Copolymer (VAcA), Styrol-Acrylat-Copolymer (SA) und Styrol-Butadien-Copolymer (SB).

9. Verfahren zur Herstellung eines beschichteten Kartonprodukts, aufweisend die Schritte:
- Bereitstellen eines Kartonsubstrats; und
- Beschichten des Kartonsubstrats mit einer Barrierebeschichtung, wobei die Barrierebeschichtung Talk und ein Bindemittel auf Polyolefinbasis aufweist und wobei die Menge an Talk in der Barrierebeschichtung 15 bis 40 Gew**.-**% beträgt, bezogen auf das Trockengewicht der Barrierebeschichtung, das Bindemittel auf Polyolefinbasis ein Polyethylen- (PE) basiertes Bindemittel ist, und wobei das Beschichtungsgewicht der Barrierebeschichtung 4 bis 15 g/m² beträgt; und
- Beschichten des Kartonsubstrats mit einer Vorbeschichtung vor dem Beschichten mit der Barrierebeschichtung, so dass die Vorbeschichtung auf dem Kartonsubstrat und zwischen dem Kartonsubstrat und der Barrierebeschichtung in dem beschichteten Kartonprodukt angeordnet ist und die Barrierebeschichtung auf der Vorbeschichtung angeordnet ist.

10. Verfahren nach Anspruch 9, wobei die Barrierebeschichtung auf der Oberseite des Kartonsubstrats aufgebracht wird.

11. Verfahren nach Anspruch 10, wobei die Barrierebeschichtung sowohl auf der Oberseite als auch auf der Rückseite des Kartonsubstrats aufgebracht wird.

12. Verwendung einer Beschichtung, die Talk und ein Bindemittel auf Polyolefinbasis aufweist, als wasserabweisende Barriere auf einem Kartonsubstrat, wobei die Menge an Talk in der Barrierebeschichtung 15 bis 40 Gew.-% beträgt, bezogen auf das Trockengewicht der Barrierebeschichtung, und das Bindemittel auf Polyolefinbasis ein Polyethylen- (PE) basiertes Bindemittel ist, und wobei das Beschichtungsgewicht der Barrierebeschichtung 4 bis 15 g/m² beträgt.

## Revendications

1. Produit en carton revêtu comprenant :
- un substrat en carton ; et
- un revêtement barrière, dans lequel le revêtement barrière comprend du talc et un liant à base de polyoléfine et dans lequel la quantité de talc dans le revêtement barrière est comprise entre 15 et 40 % en poids par rapport au poids sec du revêtement barrière, et le liant à base de polyoléfine est un liant à base de polyéthylène (PE), dans lequel le poids du revêtement barrière est compris entre 4 et 15 g/m² ;
- un pré-revêtement disposé entre le substrat en carton et le revêtement barrière, le pré-revêtement est disposé sur le substrat en carton et le revêtement barrière est disposé sur le pré-revêtement.

2. Produit en carton revêtu selon la revendication 1, dans lequel le grammage mesuré selon la norme ISO 536:2020 du substrat en carton est compris entre 120 et 300 g/m², par exemple compris entre 125 et 280 g/m².

3. Produit en carton revêtu selon la revendication 1 ou la revendication 2, dans lequel le poids du revêtement barrière est compris entre 5 et 10 g/m².

4. Produit en carton revêtu selon l'une quelconque des revendications précédentes, dans lequel le substrat en carton comporte une première face formant une face supérieure et une deuxième face formant une face arrière, et dans lequel le produit en carton comprend ledit revêtement barrière sur la face supérieure du substrat en carton.

5. Produit en carton revêtu selon l'une quelconque des revendications 4, dans lequel le produit en carton comprend ledit revêtement barrière sur la face supérieure et sur la face arrière du substrat en carton.

6. Produit en carton revêtu selon l'une quelconque des revendications 4 ou 5, comprenant en outre une couche de PE qui est la couche extérieure sur la face arrière du substrat en carton.

7. Produit en carton revêtu selon l'une quelconque des revendications précédentes, dans lequel le pré-revêtement comprend un liant et un pigment.

8. Produit en carton revêtu selon la revendication 7, dans lequel le liant du pré-revêtement est choisi dans le groupe constitué par un copolymère d'éthylène et d'acide acrylique (EAA), un copolymère d'éthylène et d'acide méthacrylique (EMAA), un copolymère d'éthylène et d'acide maléique (MAE), un copolymère d'acétate de vinyle et d'acrylate (VAcA), un copolymère de styrène et d'acrylate (SA) et un copolymère de styrène et de butadiène (SB).

9. Procédé de fabrication d'un produit en carton revêtu, comprenant les étapes consistant à :
- fournir un substrat en carton ; et
- revêtir le substrat en carton d'un revêtement barrière, dans lequel le revêtement barrière comprend du talc et un liant à base de polyoléfine et dans lequel la quantité de talc dans le revêtement barrière est comprise entre 15 et 40 % en poids par rapport au poids sec du revêtement barrière, le liant à base de polyoléfine est un liant à base de polyéthylène (PE), et dans lequel le poids du revêtement barrière est compris entre 4 et 15 g/m² ; et
- revêtir le substrat en carton d'un pré-revêtement avant le revêtement avec le revêtement barrière de telle sorte que le pré-revêtement soit disposé sur le substrat en carton et entre le substrat en carton et le revêtement barrière dans le produit en carton revêtu et que le revêtement barrière soit disposé sur le pré-revêtement.

10. Procédé selon la revendication 9, dans lequel le revêtement barrière est revêtu sur la face supérieure du substrat en carton.

11. Procédé selon la revendication 10, dans lequel le revêtement barrière est appliqué sur la face supérieure et sur la face arrière du substrat en carton.

12. Utilisation d'un revêtement comprenant du talc et un liant à base de polyoléfine comme barrière résistante à l'eau sur un substrat en carton, dans lequel la quantité de talc dans le revêtement barrière est comprise entre 15 et 40 % en poids par rapport au poids sec du revêtement barrière, et le liant à base de polyoléfine est un liant à base de polyéthylène (PE), et dans lequel le poids de revêtement du revêtement barrière est compris entre 4 et 15 g/m².
